# EUROPEAN PATENT APPLICATION

(11) **EP 4 643 641 A1**
(43) Date of publication of application: **05.11.2025**
(21) Application number: 24000096.8
(22) Date of filing: 02.08.2024
(51) Int. Cl.: A01K 47/00, A01K 47/06

(54) **RACK WITH BEEHIVE BLOCKS WITH BEEHIVE UNITS FOR PRODUCTION OF HONEY AND HONEY PRODUCTS**

(30) Priority: 30.04.2024 BG 11389524
(71) Applicant: Ambulatorija za Specializirana Individualna Medicinska Pomosht po Ortopedija i Travmatologija D-R Nikolay Nenov Ood, 7000 Rousse (BG)
(72) Inventor: Nenov, Nikolay Nenov, 7000 Rousse (BG)
(74) Representative: Nesheva, Valentina Velikova

(57) **Abstract**

Cassette with partition walls mounted on a stand structure, having pairs of comb-like beehive blocks each having elastic walls mounted on a frame alternating with covers, and beehive units mounted on the elastic walls. Each beehive unit contains one bee family and represents a dedicated space determined by the elastic wall fixed to the frame of its beehive block, sidewise - by the partition walls of the cassette, and by the cover between the elastic walls of the opposite beehive block when both opposite beehive blocks have entered into each other. Each beehive unit comprises a group of bee frames mounted at a distance from the adjacent beehive unit. Each beehive block enters into the other beehive block of the pair with its beehive units entering into the empty spaces between the adjacent beehive units of the other beehive block. Under each beehive block is mounted a camshaft with the archs of the camshaft placed under each beehive unit. The beehive blocks are movable upwards, downwards and sidewise and could be unfolded by moving one beehive block of the pair upward and forward, each beehive unit falling out describing a rainbow of 90 degrees. Turning the camshaft under each beehive block leads to opening the bee frames fan-like. Over the unforlded beehive blocks moves a carriage with means of photographing and documenting the condition of the bee families. The cassettes are mounted on a platform with modular structure for transporting to different location of bee grazing representing a moveble bee-garden, or they can be used as bee incubator.

## Description

### Technical field

The invention relates to a cassette with beehive blocks with beehive units for production of honey and honey products which are mounted in a cassette with a plurality of pairs of beehive blocks, for use in a platform on a modular principle having a plurality of cassettes, which could be transported with a vehicle to different locations with pasture for bee grazing.

### Background of the invention

Patent BG 67571 with a title "Beehive and servicing device for production of honey products" is known which discloses a beehive comprising rigid fixed walls and a movable elastic wall on which elastic wall are fixed movably and non-movably the beehive frames with the bee families. In the course of servicing the beehive the servicing device grips the elastic wall with the beehive frames, pulls it out and bends it in order to spread the frames apart in the form of a fan and to obtain access to the surfaces of the beehive frames in order to tend them, including photographing them with a camera.

### Summary of the invention

The prior art does not solve the following technical problems:
1/ Providing beehive blocks in a cassette in which beehive blocks there are no separate beehives anymore but dedicated spaces in the form of beehive units so that a plurality of bee families could be accommodated, transported, tended, observed, and documented in optimal conditions for life and development.
2/ Beehive blocks with a plurality of beehive units allowing the tending, observing, and documenting to be carried out easily and quickly for a plurality of beehive units simultaneously.

The above-mentioned objects are solved by a cassette according to the invention having partition walls, and beehive blocks having elastic walls and bee frames mounted on the elastic wall of each beehive block, said bee frames being the habitats of bee families. The cassette with the beehive blocks mounted thereon which are in a closed state form a plurality of beehive units wherein live a plurality of bee families. Each cassette could contain at least one pair of beehive blocks which are comb-like modules having frame structure of the beehive block with an elastic wall mounted on this frame structure and movable within slots (grooves) formed in the frame structure.

On the elastic wall of each beehive block are mounted bee frames organized in beehive units consisting of several bee frames and empty spaces between one group of bee frames representing one beehive unit, and the next group of bee frames representing an adjacent beehive unit.

The beehive blocks are organized in pairs, each two beehive blocks entering into each other and at that each beehive unit of a first beehive block enters into the empty space between two adjacent beehive units of a second beehive block. Each pair of beehive blocks enters into the cassette in such a manner that the partition walls formed in the frame structure of the cassette enter between each two adjacent beehive units.

Each beehive unit comprised of a group of bee frames, contain one bee family.

The beehive blocks of each pair could be spaced out by means of a harmonica type jack which engages in the beehive blocks approximately in their middles by means of fixing elements. The jack comprises a shaft having a left and a right thread in both ends, it fits into nuts forming a hinge, and in movement in a first direction it spaces out the nuts which leads to 90 degrees turn of each beehive block.

Along the length of each beehive block a wavy shaft is mounted which upon the above mentioned 90 degrees turn moves the elastic wall of the beehive block upwards and bends it in the form of a rainbow which makes the bee frames to become spaced out in the form of a fan and thus an access is guaranteed to the inner surfaces of the bee frames with the purpose of tending, observation, treating and documenting the condition of each bee family.

Over each beehive unit so formed containing a bee family is hinged a Hanneman grid which hinders the physical contact between the queen bees of vertically located bee families. The contact between the queen bees of the adjacent bee families horizontally is prevented by the partition walls of the cassette. However, in vertical aspect there are no partition walls between the pairs of beehive blocks located above each other; therefore, the said Hanneman grids are mounted hinged.

Longitudinal tubes ensure the sliding of the cassette with the beehive blocks and a system of tubing for automatic feeding, watering and treatment of the bees if fixed thereon as well, and in one embodiment of the invention within the cassette is maintained a constant temperature of 35 °C which is optimal for the development of the bees. In one embodiment in the base of the cassette are integrated infrared heating elements.

In one embodiment several cassettes are mounted on a transport platform which could have a roof and side walls closing the platform.

The front wall is stationary and the back wall represents a door. Both side walls are made of a lightweight material and could be opened. In one embodiment on the roof of the platform are mounted solar batteries. The platform is modular and could be extended and build on.

Each of the cassettes with beehive blocks according to the present disclosure has two immovably fixed transverse tubes mounted in the base, to which are fixed longitudinal tubes playing the role of skates moving in roller elements mounted in the base of the platform so that the cassettes could be moved and have a tunnel formed therebetween in order to ensure access for tending the bee families and movement of the photographic equipment. The cassettes could be moved forward and backward as well as sideways to form the tunnel.

Each cassette has a frame structure. In one embodiment the frame structure of the cassette is metallic, made of metal winkels and square tubes in the form of a stand having partition walls of a suitable material, e.g. thick fabric, cork, non-woven fabric, or another suitable material which does not allow the horizontal contact of the adjacent bee families. In another embodiment the frame structure is wooden, made for example of wood or bamboo, and partition walls of a suitable material.

On each cassette are mounted rakes on which travels a device moving at least two oppositely located cameras for photographing the conditions of the bee families. In one embodiment of the invention the said device has a plurality of photographic cameras mounted thereon. The cameras could be moved forward, backward as well as sideways.

Each cassette contains a plurality of comb-like beehive blocks representing a frame of rectangular elements, a cover and an elastic wall being mounted alternately on each of these rectangular elements through one. On each elastic wall are fixed bee frames. The beehive blocks are arranged in several rows in a cassette, each two adjacent rows being spaced from each other and in these spaces could be formed honeycomb deposits (honeycomb without a base and frame usually build by the bee families).

In each beehive block are formed beehive units of several bee frames mounted on each elastic wall, any two adjacent elastic walls of the beehive block being divided by a cover. Any two opposite beehive blocks enter into each other with their respective beehive units, the beehive units of the fist block entering chequerwise into the empty spaces between the beehive units of the second block, being closed by the covers of the first beehive block which alternate with the elastic walls of the second beehive block. Horizontally the beehive units are separated from each other by the partition walls of the cassette.

Each beehive unit represents a dedicated space determined by the elastic wall fixed to the frame of its beehive block, sidewise - by the partition walls of the cassette, and by the cover between the elastic walls of the opposite beehive block when both opposite beehive blocks have entered into each other. Each beehive unit has a Hanneman grid on its top which hinders vertically the contact of the queen bees of the individual bee families. In the structure of the invention the Hanneman grid is fixed on on the frame of the beehive block.

The beehive blocks could be unfolded in the frames of each cassette in order to be tended and observed while they stay in one location of bee grazing. The unfolding is done by moving each beehive unit upward and forward, each beehive unit falling out describing a rainbow of 90 degrees. The pairs of comb-like beehive blocks entering into each other go outward in opposite directions to each other.

After taking out the beehive units upward and forward they are unfolded fan-like as well, such that each beehive unit of the comb of the beehive block is curved in the form of arch by bending its elastic wall over the curve of the wavy shaft located underneath the said elastic wall, and fan-like unfolding of the bee frames fixed on the elastic wall.

At the discretion of the beekeeper the platform with the cassettes with beehive blocks mounted therein is brought into transport condition with closed beehive blocks and dismantled or folded telescopic feet, and it is transported to another location wherein it could be unfolded against and another forage for the bees could be provided.

In the carrier platform could be placed smaller or larger size cassettes with beehive blocks. The platform accommodates several cassettes and in one preferred embodiment it accommodates 4 cassettes. In another preferred embodiment the number of cassettes is 12. However, the number of cassettes which could be accommodated in one carrier platform is not limited in any manner although the minimal number of cassettes placed on one platform is at least one, and from a practical point of view is two.

In one embodiment of the invention the observation and documenting are carried out by a photographic equipment, e.g. photo cameras moved gradually on a carriage over racks mounted in the top part of the cassettes. In one embodiment of the invention the photographic equipment has an automatic control. However, the photographic equipment could be moved by hand or the documenting could be done by means of an external device, e.g. a mobile phone, tablet, etc., which are not fixed on the cassette but are operated manually by the beekeeper.

Tending bee families could be done by feeding nourishment, water, medicaments, and other required substances by means of tubing.

In one embodiment of the invention the platform has a thermal jacket which envelops it on all sides and allows maintaining the required optimal temperature for life and development of bees. In this embodiment the platform with the cassettes and beehive blocks and beehive units could be used as an incubator.

In one embodiment of the invention the platform with the cassettes is connected to a computer equipment allowing storage of the observation data for the bee families and remote control of the platform with the cassettes and beehive blocks and beehive units representing in fact a whole mobile bee-garden, and remote changing the life conditions of the bees by regulating the temperature, the amount of the fed water and nutrients, medicaments, and additives.

### Short description of the Figures

Fig. 1 shows a perspective view of one embodiment of a pair of beehive blocks according to the invention in an open working position, one of the beehive blocks being shown on the right-hand side with unfolded bee frames, and the second beehive block of the pair being shown on the left-hand side with frames which are not unfolded.
Fig. 2a shows a front perspective view of a cassette for beehive blocks according to the invention intended for accommodating in a transport platform. On this Figure are not shown the beehive blocks but only the side partition walls between the beehive units.
Fig. 2b shows a side view of the cassette of Fig. 2a.
Fig. 2c shows a top view of the cassette of Fig. 2a.
Fig. 2d is a simplified view of the pair of beehive blocks of Fig. 1 on which is shown the scaffold structure of the beehive blocks and the groove into which is moved the elastic wall.
Fig. 2e shows the wavy shaft in the beehive block by means of which are deformed the elastic walls of the individual beehive units at the revolution of the shaft.
Fig. 2f shows a partial side view of the cassette of Fig. 2a on which is shown the device for a simultaneous spacing out and opening of the pair of opposite beehive blocks.
Fig. 2g is a side view of the cassette with two pairs of beehive blocks opened.
Fig. 3 is a front view of a cassette with accommodated therein closed beehive blocks according to the invention.
Fig. 4 is a top view of the frame structure of the platform carrying cassettes with beehive blocks.
Fig. 5a is a side view of a platform with telescopic feet in which are accommodated two cassettes with beehive blocks according to the invention. The beehive blocks in the left-hand cassette are closed, and those in the right-hand side cassette are opened in a working position.
Fig. 5b is a front view of the platform of Fig. 5c with two cassettes with beehive blocks according to the invention and a reservoir for water and syrup as well as arms with cameras mounted thereon.
Fig. 5c is a top perspective view of a platform according to the invention with four cassettes with beehive blocks and telescopic legs of the platform mounted on the platform.
Fig. 6 is a top view of the frame structure of the platform for transport of cassettes with beehive blocks according to the invention.
Fig. 7 illustrates the manner of assembling the structure of the platform of Fig. 6.

### Detailed description of embodiments of the invention

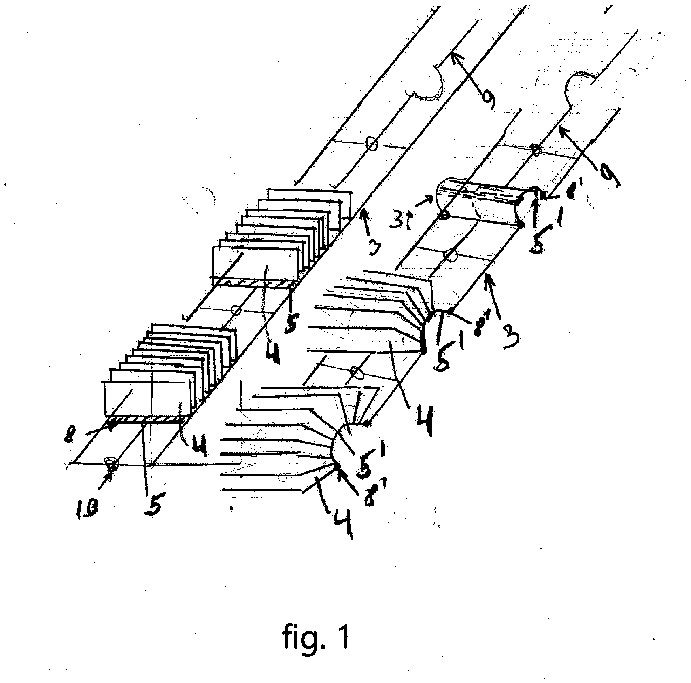

Fig. 1 shows a perspective view of one embodiment of a pair of beehive blocks according to the invention in an open working position, a first beehive block with unfolded frames being shown on the right-hand side, and a second beehive block of the pair with frames which are not unfolded being shown on the left-hand side. On the Figure are shown two beehive blocks 3, 3' from the top row of the cassette 2. The beehive blocks are arranged symmetrically opposite each other. The beehive block 3' is in unfolded working position and the beehive block 3 is not in unfolded position. In principle, the beehive blocks 3, 3' could be unfolded simultaneously or individually according to the particular case. With number 4 are designated the bee frames mounted on the elastic walls 5 arranged on the frame structure 6 of the beehive 3. The bee frames 4 are several in number (for example 9) and form one beehive unit. The elastic walls 5' of the beehive block 3' are in a curved working position. At the four angles of the elastic walls 5, 5' are arranged rollers 7, and on each two opposite rollers are mounted spokes 8, 8' which strain the ends of the elastic wall 5' and hinder its deformation in any other direction that in the direction of the movement of the rollers.

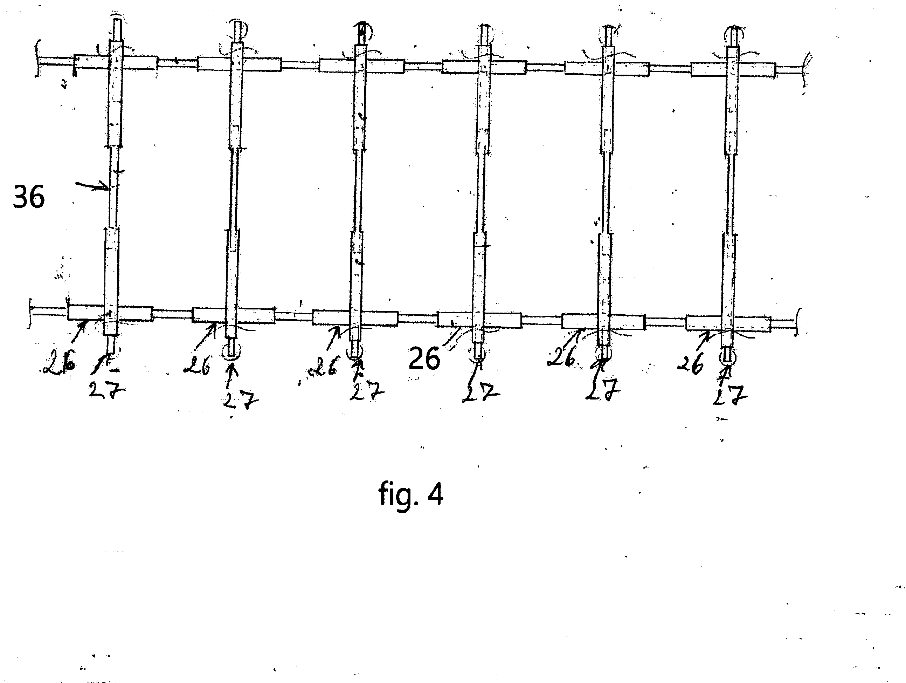

In a central position axially to the ends of the frame 6 of the beehive block 3' is mounted a camshaft 9' along the axis A'B' of the beehive block 3'. When the camshaft 9' is rotated by a crank or any other suitable device 10' the elastic walls 5' of the beehive block 3' become deformed and move upwards of the beehive block 3. Simultaneously the bee frames 4' arranged on the arches of the camshaft 9 with this movement become unfolded fan-like. However, this fan-like unfolding takes place after the opening of the beehive blocks 3, 3' by their movement upwards and outward of the frame structure 6. This will be explained further in the discussion of Fig. 4f.

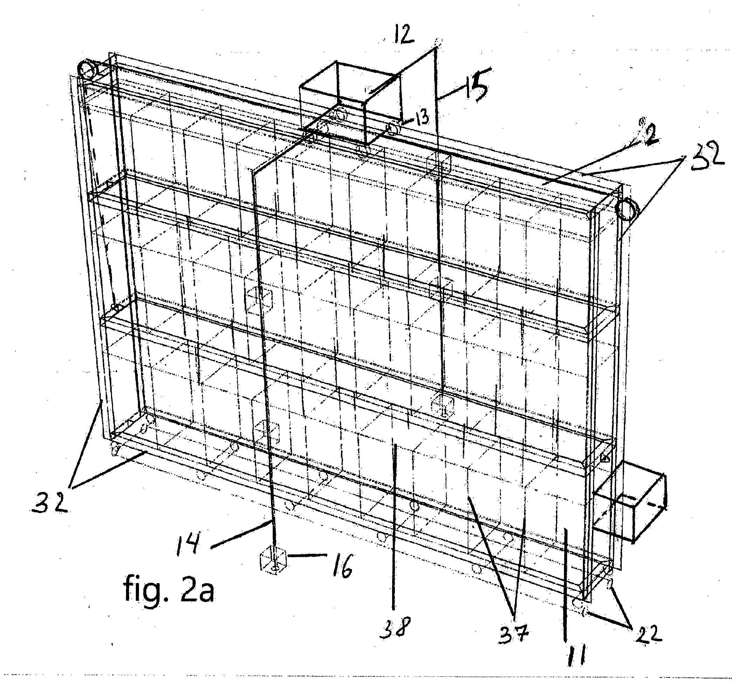

Fig. 2a shows a front perspective view of a cassette 2 for beehive blocks according to the invention intended for accommodation in a transport platform. On this Figure are not shown the beehive blocks but only the side partition walls between the beehive units. On this Figure the cassette is shown without the beehive blocks and it is obvious that it represents a stand structure with shelves and partition walls. The partition walls could be made of any suitable material which does not allow the horizontal contact between the individual bee families. A device is shown which represents a carriage 12 on which are mounted two arms 14, 15 on which are moved cameras 16, 16', 16"... When observation and documenting is needed the beehive blocks of the cassette 2 are opened, the elastic walls become deformed and the bee frames become spaced out and the carriage 12 is moved gradually forward and backward over the opened beehive blocks and the bee frames unfolded fan-like so that the cameras on the carriage could photograph the current condition of the bee families.

In one embodiment the carriage 12 is provided with a transceiver which transmits remotely the cameras data to a computer management center.

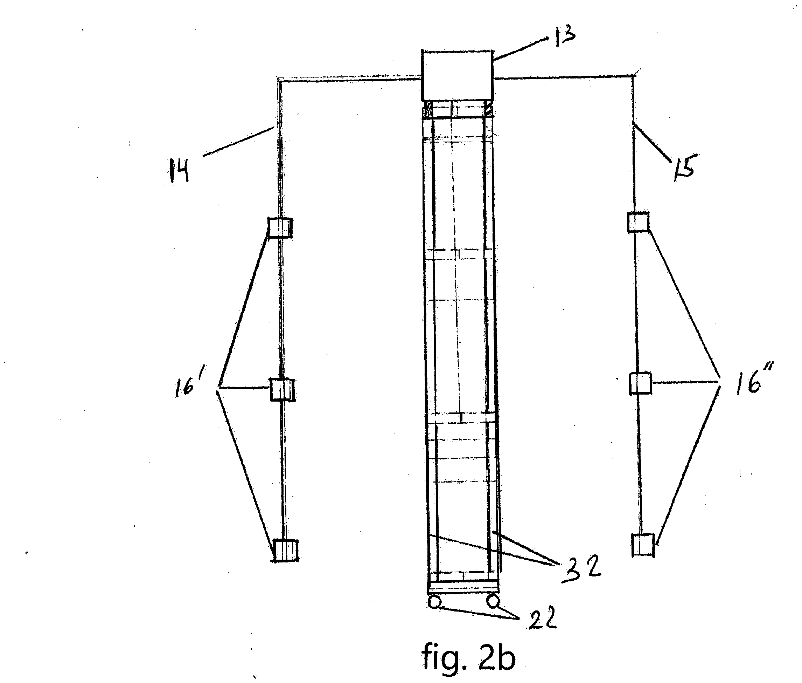

Fig. 2b shows a side view of the cassette of Fig. 2a. Here could be well seen the arms 14, 15 with the cameras 16, 16', 16".

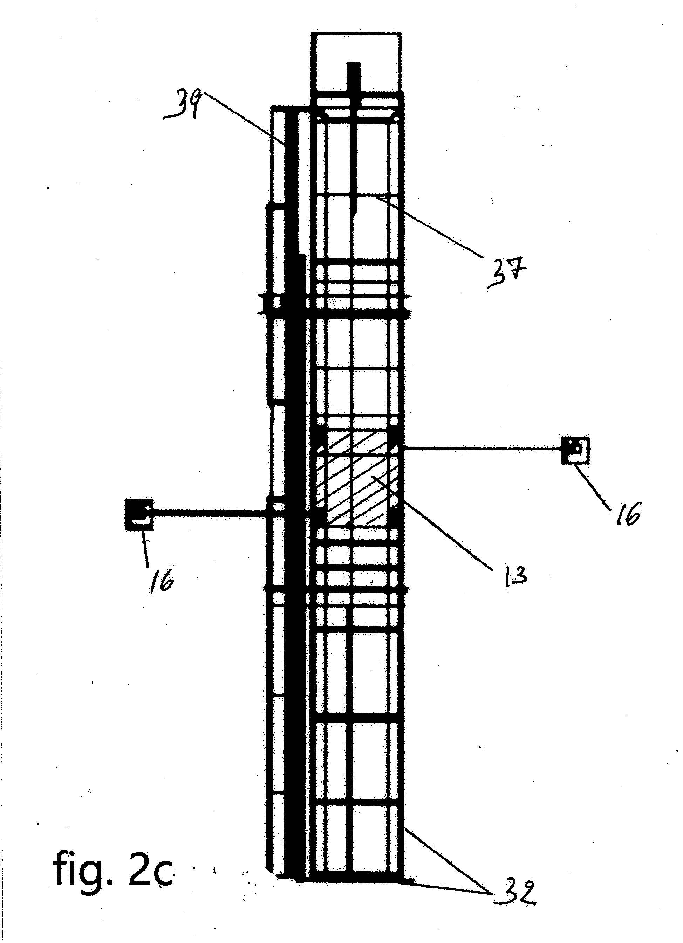

Fig. 2c shows a top view of the cassette 2 of Fig. 2a.

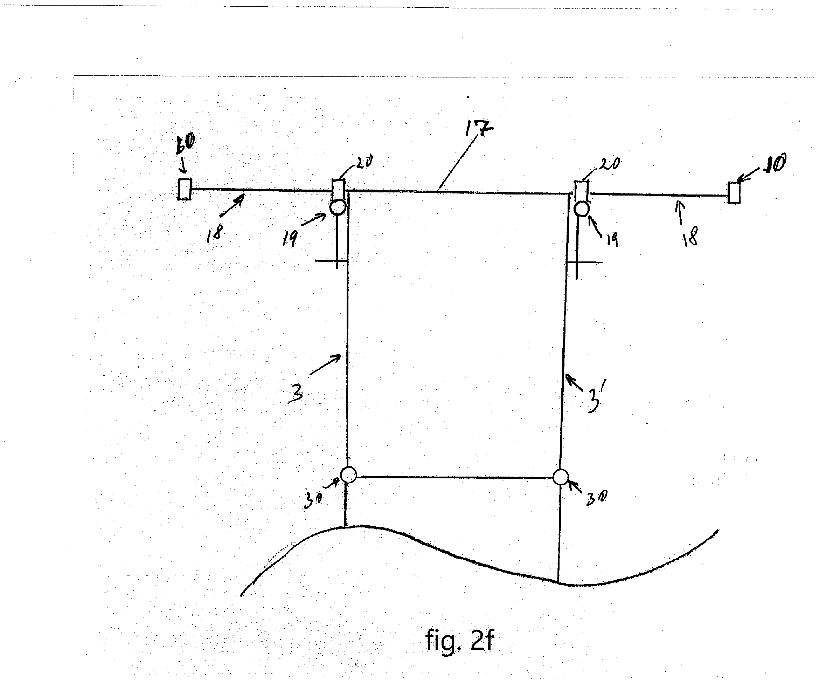

Fig. 2f shows a partial side view of the cassette 2 of Fig. 2a with a device 17 for a simultaneous opening of two opposite beehive blocks. Device 17 includes a shaft 18 having opposite (left-hand and right-hand side) threads at its ends and hinges 19, 19' with corresponding wedges entering into the beehive block 3 and nuts 20, 20' on the shaft on both sides of hinges 19. 19'. When the shaft is rotated by means of a corresponding device (e.g. a crank, screwdriver, etc.) the nuts 20. 20' become spaced out and the hinges 19, 19' rotate at 90 degrees, and beehive blocks are moved upwards and forwards and are opened. Closing is done in the opposite direction.

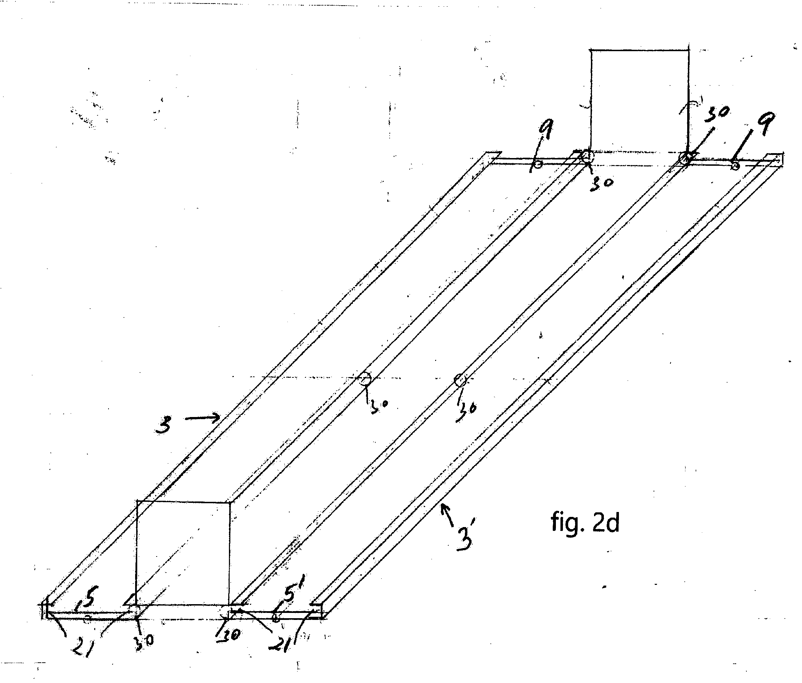

Fig. 2d is a simplified view of the cassette of Fig. 1 on which is seen the groove 21 of the beehive block 3' and the opened beehive blocks 3, 3'. Here it is seen clearly that the elastic wall 5' moves in the groove 21 but does not fill it completely. The spoke 8' straining the elastic wall 5' is seen here two.

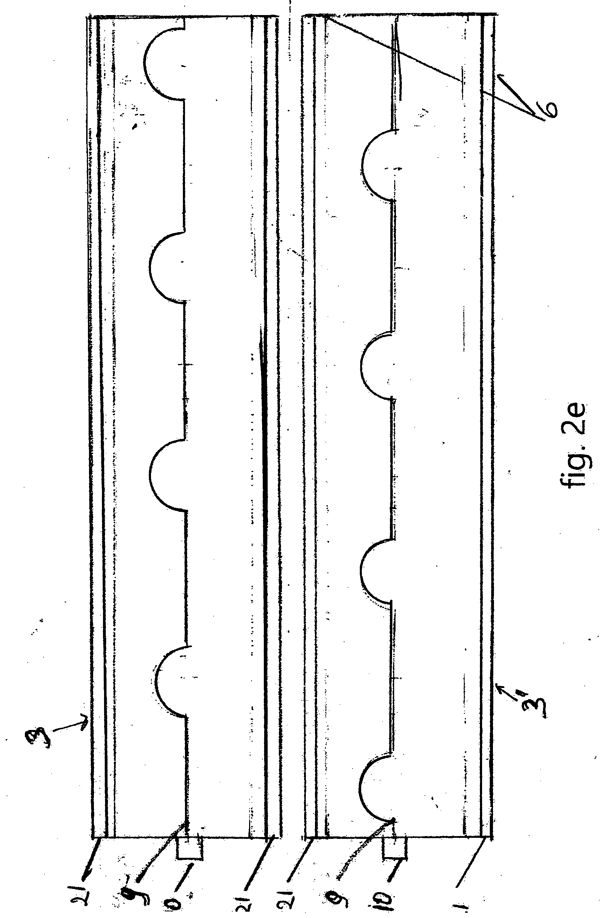

Fig. 2e shows camshafts 9, 9'.

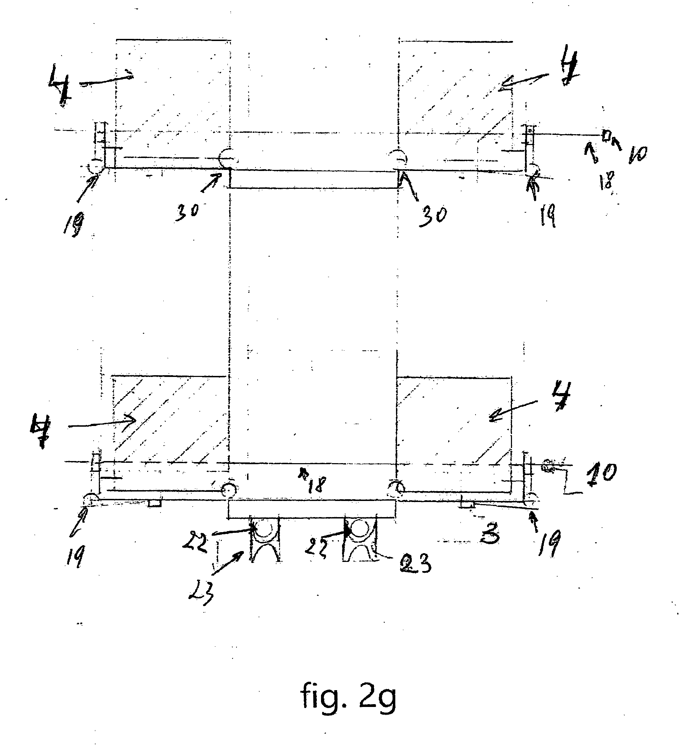

Fig. 2g shows the cassette 2 of Fig. 1 with opened beehive blocks 3, 3' with the skates 22, 22' and spools 23, 23'. The device 17 opening the beehive blocks 3, 3' is shown here as well.

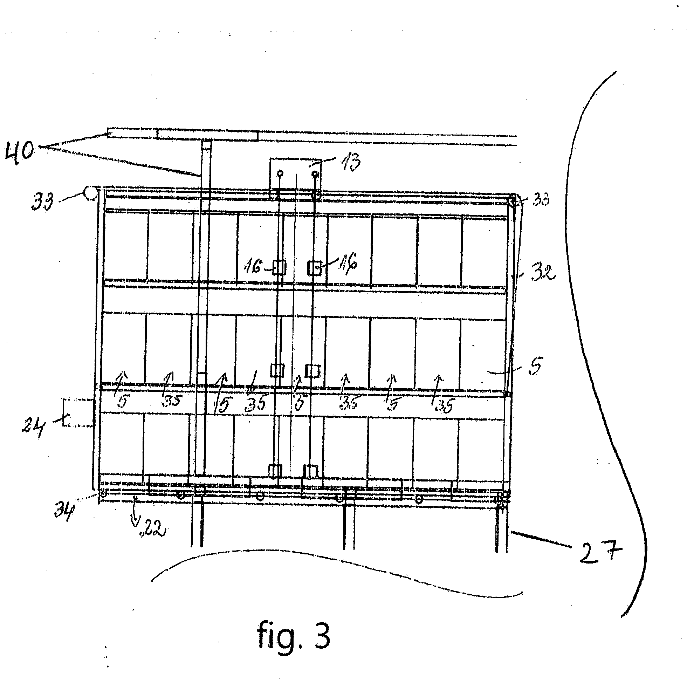

Fig. 3 is a front view of the cassette 2 with rows A, B, C of beehive blocks. At row A are located the beehive blocks 3, 3' of Fig. 1. At rows B and C are arranged further pairs of beehive blocks. In one embodiment of the invention the middle row B could be moved upwards and downwards by an electric motor 24. In the empty spaces between the rows A, B, C the bees build honeycombs without a base and side walls. By moving the middle row B upwards or downwards the intermediate spaces could be enlarged gradually which allows the bees to build gradually the honeycombs and fill them with honey. On Fig. 3 are seen the skates 22, 22'... of the cassette 2 as well as the beehive units 11 in the closed state of the beehive blocks. In one embodiment each row of the cassette 2 together with the empty space between the said row and the next row is covered with an additional covering of a flexible sheet material, e.g. textile, polyethylene, paper, and any other suitable material (not shown on the Figure) which closes the space of the honeycombs and isolates it against external influences.

Fig. 4 is a top view of the frame structure of the carrier platform. Here are seen the modular elements 25 (cross-shaped or T-shaped) and the tubular elements 26 fitting therein which build the structure.

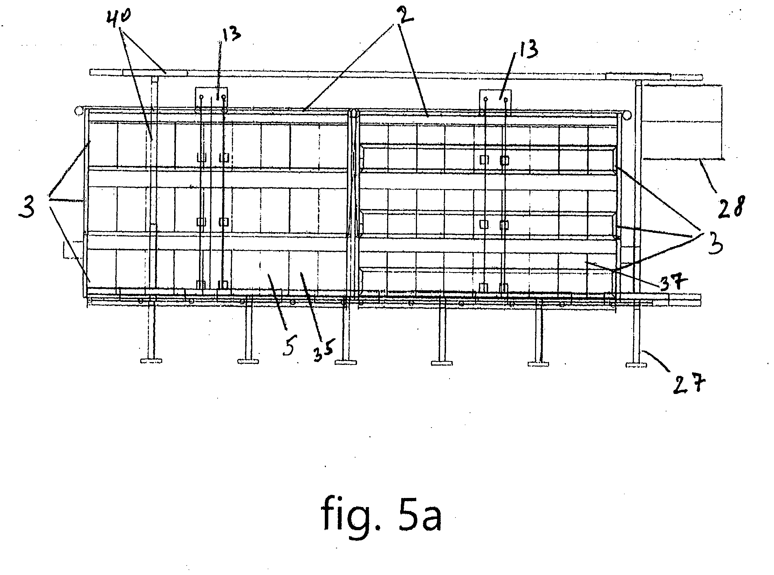

Fig. 5a is a side view of a platform with telescopic legs in which are placed two cassettes 2 and 2' with beehive blocks according to the invention. The beehive blocks of the left-hand side cassette are closed and those of the right-hand side cassette are opened in a working position.

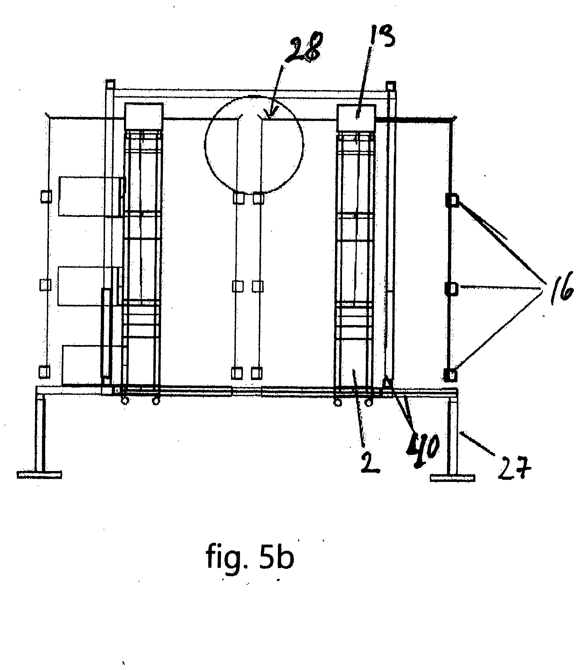

Fig. 5b is a front view of the platform of Fig. 5a with two cassettes with beehive blocks according to the invention, and a reservoir for water and syrup as well as arms with cameras mounted thereon.

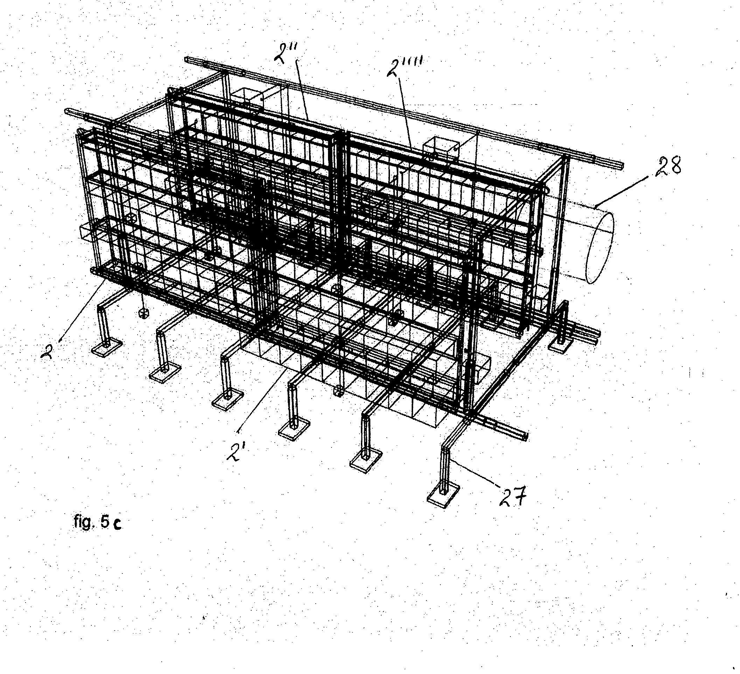

Fig. 5c is a top perspective view of platform 1 according to the invention with four cassettes 2 mounted thereon - cassettes 2" and 2ʺʺ are mounted at the back - on the left and right-had sides, and cassettes 2 and 2' are mounted in the front - on the left and right-hand sides, accordingly, with beehive blocks 3, 3'..., and telescopic legs 27. The beehive blocks of the cassette 2 are closed, and those of the cassette 2' are in open working position and brought forward. The tunnel is seen which is formed between the cassette 2 and cassette 2ʺʺ located there behind. Reservoir 28 is mounted on the frame structure of the platform. The reservoir 28 contains water and nutrition for the bees, in separate chambers as well as additional nutrients and medicaments, as needed.

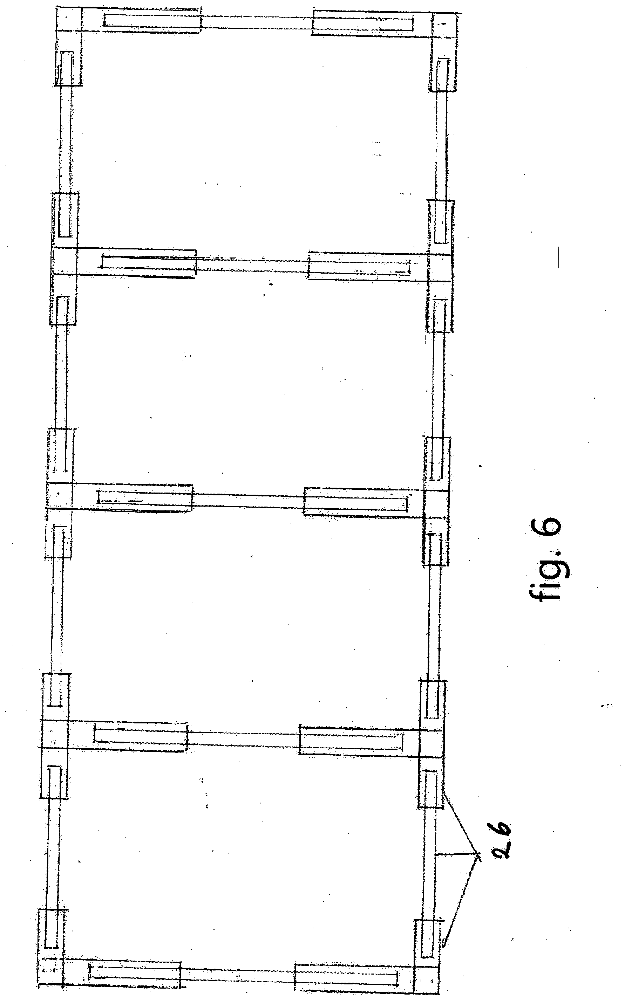

Fig. 6 is a top view of the frame structure of the platform for transportation of cassettes with beehive blocks according to the invention.

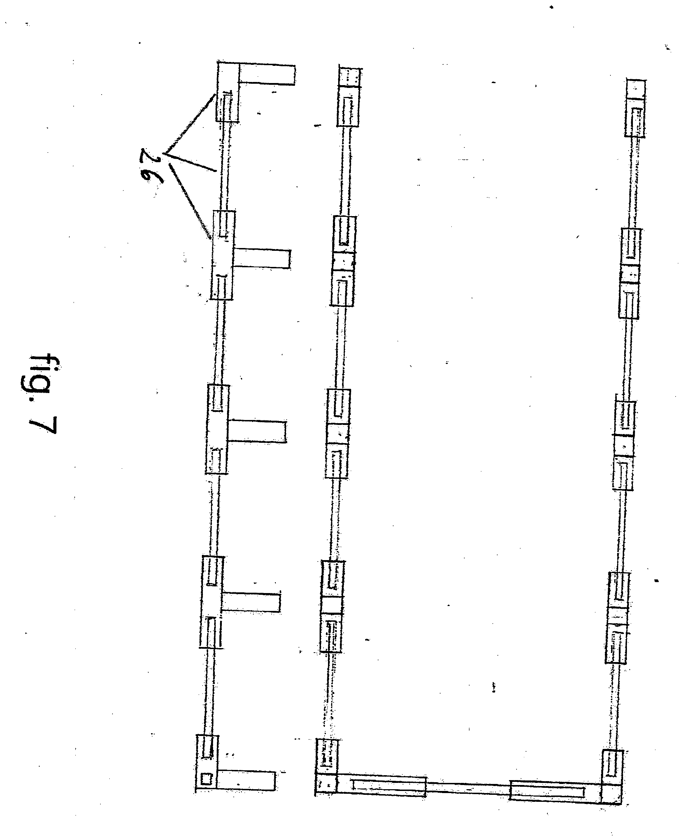

Fig. 7 illustrates the manner of assembling the platform structure of Fig. 6.

During transportation the platform is elevated to the required height by means of jacks or a crane, the transport vehicle enters underneath the platform with its cargo space and the platform is lowered onto the cargo space of the transport vehicle. The unloading is done is reverse order.

The present invention is not limited to the disclosed embodiments but should be practiced within the broadest scope corresponding to the teaching of this disclosure.

## Claims

1. Cassette with beehive blocks with beehive units formed by a plurality of bee frames fixed to an elastic wall in such a manner that the elastic wall with the bee frames could be pulled forward and the elastic wall could be curved,
**characterized in that**
- cassette (2) comprises a frame structure of stand type with shelves and partition walls, on each row (a, B C) of the said frame structure being accommodated a pair of beehive blocks (3, 3') which are located symmetrically opposite and represent comb-like modules with a frame structure (6, 6') of the beehive block and alternating covers representing Hanneman grids and elastic walls (5, 5') mounted on this frame structure, the elastic walls being movable by means of four rollers (7, 7') in grooves formed in the frame structure of the beehive block (3, 3'), the said rollers (7, 7') being mounted at the four edges of each elastic wall and connected two by two with spokes (8, 8'); on each elastic wall (5, 5') of each beehive block (3, 3') being mounted fixedly at least two bee frames (4) making a group of bee frames which together with the partition walls of the cassette (2) form a beehive unit, with empty places between each two groups of bee frames (4) corresponding to the size of a group of bee frames (4);
- at that the pair of beehive blocks (3, 3') is formed thus that the beehive blocks (3, 3') located opposite to each other in their closed state are entered into each other, the groups of bee frames (4) of the first beehive block (3) are entered in the empty spaces between the groups of bee frames (4') of the other beehive block (3') and they are closed by the corresponding covers of the opposite beehive block, and the pair of beehive blocks (3, 3') is accommodated in one row (A, B, C) of the cassette (2) surrounded by the partition walls of the frame structure of the cassette (2) such that in the closed state of the beehive blocks (3, 3') the partition walls of the cassette are located between each two adjacent groups of bee frames (4, 4') of the beehive blocks of the pair entered into each other;
- at that between the row (A, B, C) of the cassette are provided empty spaces above the beehive blocks (3, 3') allowing the rotation upward and forward of the beehive blocks (3, 3') and under each beehive block of the pair of beehive blocks is mounted a camshaft (9, 9') with its curves under each elastic wall (5, 5') of the corresponding beehive block (3, 3'), the pair of beehive blocks (3, 3') being pullable out by rotating of the beehive bocks (3, 3') at 90 degrees upwards and out of the frame structure of the cassette (2) by means of a corresponding means (17) for rotating and spacing out of the beehive blocks mounted on the said beehive blocks, and being provided with the possibility of unfolding the frames (4, 4') of each beehive block (3, 3') of the pair of beehive blocks when its camshaft is rotated (9, 9').

2. Cassette with beehive blocks with beehive units according to claim 1, **characterized in that** the means (17) for rotating and spacing out of the beehive blocks is a harmonica type jack fixed at approximately the middles of the beehive blocks and comprising a shaft (18) with a left-hand and right-hand thread at its both ends and hinges (19, 19') with corresponding wedges fitting into the beehive block (3) and nuts (20, 20') mounted on the shaft (18) on both sides of the hinges (19, 19') with the possibility of 90 degrees rotation.

3. Cassette with beehive blocks with beehive units according to claims 1 and 2, **characterized in that** the bee frames (4, 4') in a beehive unit are 9 in number and there is one bee family in each beehive unit.

4. Cassette with beehive blocks with beehive units according to claims 1-3, **characterized in that** the bee frames (4, 4') are arranged movably on the elastic wall (5, 5').

5. Cassette with beehive blocks with beehive units according to claim 1, **characterized in that** both beehive units (3, 3') of a pair of beehive units (3, 3') are opened simultaneously by the means (17) for rotating and pulling out of the pair of beehive blocks.

6. Cassette with beehive blocks with beehive units according to all preceding claims, **characterized in that** the rows (A, B, C) of the cassette are movable upwards and downwards.

7. Cassette with beehive blocks with beehive units according to claim 6, **characterized in that** each row (A, B, C) of the cassette (2) together with the empty space between the said row and the next row is covered by a covering made of flexible sheet material.

8. Cassette with beehive blocks with beehive units according to any of the preceding claims, **characterized in that** the cassette further has a device for photographing the opened beehive blocks including carriage (12) with arms (14, 15) on which are mounted movably cameras (16, 16', 16"), the carriage (12) being movable gradually forwards and backwards over the opened beehive blocks.

9. Cassette with beehive blocks with beehive units according to claim 8, **characterized in that** on the carriage (12) is mounted a transceiver connected remotely to a computer management center.

10. Platform for accommodating at least two cassettes with beehive blocks with beehive units according to claims 1-9, having telescopic legs and frame structure, **characterized in that** the frame structure is formed of cross-shaped modular elements (25) and T-shaped tubular elements (26), and the said cassettes with beehive blocks with beehive units are arranged symmetrically at both opposite ends of the platform, on immovably fixed transverse tubes and longitudinal tubes fitting into roller elements mounted on the base of the platform, the cassette being movable forwards and backwards as well as sidewise.

11. Platform with telescopic legs and frame structure according claim 10, **characterized in that** it is composed of modules with the possibility of being made longer and higher.

12. Platform according to claims 10-11, **characterized in that** it comprises further a reservoir for water and syrup (28) connected to the cassettes by tubing.

13. Platform according to claims 10-12, **characterized in that** it comprises a roof and side walls and includes further a means for maintaining a constant temperature.

14. Use of a cassette with beehive blocks with beehive units according to claims 1-9 as a mobile bee-garden for production of honey and honey products by a plurality of bee families.

15. Use of a cassette with beehive blocks with beehive units according to claims 1-9 as bee incubator.
